# EUROPÄISCHE PATENTSCHRIFT

(11) **EP 1 535 435 B1**
(45) Veröffentlichungstag und Bekanntmachung des Hinweises auf die Patenterteilung: **04.10.2006**
(21) Anmeldenummer: 03793690.3
(22) Anmeldetag: 05.08.2003
(51) Int. Cl.: H04L 12/56, H04L 29/08

(54) **VERFAHREN UND VORRICHTUNG ZUM ÜBERTRAGEN VON DIENSTGÜTE- UND ADRESSINFORMATIONEN IN EINEM KOMMUNIKATIONSSYSTEM BEI BIDIREKTIONALER KOMMUNIKATION**
METHOD AND DEVICE FOR THE TRANSMISSION OF SERVICE QUALITY AND ADDRESS INFORMATION IN A COMMUNICATION SYSTEM WITH BI-DIRECTIONAL COMMUNICATION
PROCEDE ET DISPOSITIF POUR TRANSMETTRE DES INFORMATIONS DE QUALITE DE SERVICE ET D'ADRESSE DANS UN SYSTEME DE COMMUNICATION POUR UNE COMMUNICATION BIDIRECTIONNELLE

(30) Priorität: 04.09.2002 EP 02019920
(43) Veröffentlichungstag der Anmeldung: 01.06.2005
(73) Patentinhaber: SIEMENS AKTIENGESELLSCHAFT, 80333 München (DE)
(72) Erfinder: DAUERER, Jörg, 82194 Gröbenzell (DE); WALDHAUSER, Richard, 81249 München (DE)
(86) Internationale Anmeldenummer: PCT/EP2003/008661
(87) Internationale Veröffentlichungsnummer: WO 2004/023737

(56) Entgegenhaltungen:
- EP-A- 1 206 098
- WO-A-02/15627
- DE-C- 19 910 112
- FR-A- 2 799 326
- US-A1- 2001 014 085
- US-A1- 2002 075 859
- SCHULZRINNE H ET AL: "RFC 1889: RTP: A Transport Protocol for Real-Time Applications" NETWORK WORKING GROUP REQUEST FOR COMMENTS, XX, XX, Januar 1996 (1996-01), Seiten 1-38, XP002229836

## Beschreibung

Die Erfindung bezieht sich auf ein Verfahren zum Übertragen von Informationen in einem Kommunikationssystem mit den oberbegrifflichen Merkmalen des Patentanspruchs 1 sowie eine Kommunikationssystem-Vorrichtung zum Durchführen eines solchen Verfahrens.

Bei Kommunikationssystemen findet eine Kommunikation zwischen teilnehmerseitigen Datenendgeräten, z. B. Mobilfunkgeräten oder funkgestützten Rechnern, über eine Vielzahl zwischengeschalteter Stationen und Einrichtungen eines Kommunikationsnetzes statt. Bei Kommunikationssystemen wie dem UMTS (Universal Mobile Telecommunications System) werden dabei Übertragungen einer aufgebauten Verbindung z. B. über eine Teilstrecke von einer Funknetz-Steuereinheit (RNC: Radio Network Controller) zu einer Sende- und Empfangsstation (NodeB) übertragen. Die Sende- und Empfangsstation dient zum Aufbau einer Funkverbindung zu einer teilnehmerseitigen Station. Die Funknetz-Steuereinrichtung dient zum Koordinieren verschiedener Sende- und Empfangsstationen sowie zum Weiterleiten von Daten zu bzw. von der teilnehmerseitigen Station in Richtung einer weiteren teilnehmerseitigen Station in diesem oder einem anderen Kommunikationssystem.

Insbesondere auf der Verbindungsstrecke zwischen der Funknetz-Steuereinrichtung und der Sende- und Empfangsstation besteht oftmals die Situation, dass gewisse Informationen bezüglich der Verbindung oder der zu übertragenden Daten oder Datendienste nur auf einer Seite der Verbindung vorhanden sind, für eine optimale Verarbeitung oder Weiterleitung der Daten aber auf beiden Seiten benötigt werden. Beispielsweise ist die Information über eine geforderte Dienstequalität bestimmter Verbindungen, z. B. die maximal zulässige Übertragungsverzögerung von Daten einer bestimmten Verbindung, nur in der Funknetz-Steuereinrichtung, nicht aber in der Sende- und Empfangsstation vorhanden. Wenn Daten bzw. eine Information zur teilnehmerseitigen Station zu übertragen sind und bei der Funknetz-Steuereinrichtung oder einer anderen von dieser gesteuerten Einrichtung eintreffen, kann diese Information als Zusatzinformation zusammen mit den Daten an die Sende- und Empfangsstation und über diese bei Bedarf an die teilnehmerseitige Station weitergeleitet werden. Werden jedoch Daten von der teilnehmerseitigen Station über eine entsprechend parallel aufgebaute Verbindung in umgekehrter Richtung übertragen, so können derartige Zusatz-Informationen von der Sende- und Empfangsstation nicht in Richtung der Funknetz-Steuereinrichtung oder anderer von dieser verwalteter Stationen weitergeleitet werden. Für einen effektiven Austausch der Daten über eine derartige bidirektionale Verbindung, die aus zwei einzelnen Verbindungen in entgegengesetzter Richtung zwischen den Kommunikationsteilnehmern besteht, hier z. B. der Funknetz-Steuereinrichtung und der Sende- und Empfangsstation, müssen jedoch beide Kommunikationsteilnehmer die Information über die für die Verbindung geforderte Qualität haben.

Üblicherweise erfolgt eine entsprechende gegenseitige Information der beteiligten Stationen bzw. Einrichtungen dadurch, dass Parameter, welche die Zusatzinformation, wie z. B. die geforderte Qualität, beschreiben, beim Aufbau der bidirektionalen Verbindung bzw. der Verbindung in Gegenrichtung zwischen den Kommunikationsteilnehmern über eine separate Verbindung ausgetauscht bzw. signalisiert werden. Dies macht neben dem Aufbau einer separaten Signalisierungsverbindung auch Aufwand bei der Verwaltung eines Verbindungsaufbaus.

Ein anderes beispielhaftes Kommunikationssystem mit derselben Problematik ist ein Datennetz mit einer Steuerung gemäß z. B. dem Internetprotokoll (IP). Über eine funkgestützte oder kabelgebundene Schnittstelle kommunizieren Rechner, beispielsweise sogenannte mobile Hosts mit einer Netzzugangsstation bzw. einem sogenannten Zugriffspunkt. Von dem Zugriffspunkt aus werden Datenverbindungen zu einem Server aufgebaut, welcher z.B. von dem Rechner als teilnehmerseitiger Station angeforderte Daten enthält. Nach einer Datenanforderung stellt der Server entsprechende Daten bereit und sendet diese in Rückwärtsrichtung zu einem Heimatagenten, von welchem die teilnehmerseitige Station verwaltet wird. Der Heimatagent, der stets über den Aufenthaltsort der teilnehmerseitigen Station informiert ist, leitet dann die Daten an den zuständigen Zugriffspunkt weiter, über welchen die Daten letztendlich an die anfordernde teilnehmerseitige Station übersendet werden.

Bei einem solchen Kommunikationssystem, z. B. einem sogenannten funkgestützten lokalen Datennetz (WLAN: Wireless Local Area Network) findet somit zum Aufbau der Rückverbindung ein indirekter Verbindungsaufbau über eine weitere Station statt, welche Datenpakete dann entsprechend weiterleitet.

Bei Paket-Datenverbindungen, welche auf beispielsweise dem Internet-Protokoll basieren, kann z. B. die geforderte Qualität der Verbindungen als Zusatz-Information durch ein bestimmtes Feld im Paket-Kopfabschnitt (Header) jedes Datenpaketes angezeigt werden. Ein solches.Feld ist z. B. das sogenannte Servicetype-Feld (TOS: Type Of Service field), welches in jedem IP-Kopfabschnitt vorhanden ist. Bei einer Kommunikation zwischen der Funknetz-Steuereinrichtung und der Sende- und Empfangsstation in dem einleitend beschriebenen Kommunikationssystem gemäß UMTS kann die Funknetz-Steuereinrichtung bei IP-basierter Datenübertragung durch einen Eintrag in dem Feld für die Zusatz-Information des Kopfabschnitts z. B. die geforderte Verbindungsqualität festlegen, da diese Qualitätsinformation in der Funknetz-Steuereinrichtung verfügbar ist.

Diese Grundproblematik besteht bei einer Vielzahl verschiedenartigster Kommunikationssysteme, welche für einen Teil oder die Gesamtheit der Kommunikationsverbindungen zwischen einzelnen beteiligten Stationen und Einrichtungen auf das Internet-Protokoll oder vergleichbare Protokolle zurückgreifen.

Aus der US 2002/0075859 A1 ist ein Verfahren bekannt, bei dem eine Basisstation einen TLLI (temporary logical link identifier) an eine Mobilstation sendet. Der TLLI gibt an, mit welcher Dienstgüte (QoS rating) die Mobilstation nachfolgend Daten an die Basisstation senden soll und mit welcher Dienstgüte die Basisstation Daten an die Mobilstation überträgt. Weiterhin ist vorgesehen, dass die Mobilstation bei der Anfrage eines Dienstes den ihr aktuell zugewiesenen TLLI an die Basisstation sendet.

Die Aufgabe der Erfindung besteht darin, ein Verfahren zum Übertragen von Zusatz-Informationen zu vereinfachen bzw. eine Kommunikationssystem-Vorrichtung zum Durchführen eines solchen Verfahrens vorzuschlagen.

Diese Aufgabe wird durch ein Verfahren zum Übertragen von Informationen in einem Kommunikationssystem mit den Merkmalen des Patentanspruchs 1 bzw. eine Kommunikationssystem-Vorrichtung mit den Merkmalen des Patentanspruchs 10 gelöst.

Die Verfahrensweise bzw. die entsprechende Kommunikationssystem-Vorrichtung, bei der eine Zusatzinformation bezüglich einer Verbindung in einer diese Zusatzinformation empfangenden Station beim Aufbau einer Rückverbindung bzw. beim Übertragen von Datenpakten, welche über eine derartige Rückverbindung zu senden sind, eingesetzt wird, ermöglicht eine direkte Übertragung der Datenpakete in Rückwärtsrichtung ohne den Einsatz einer zusätzlichen Signalisierung über eine separate Verbindung oder gar den Versand des Datenpaketes zu einer weiteren Einrichtung, welche dann wiederum eine Weiterleitung des Datenpaktes an die anfordernde Station ermöglicht. Das Nutzen einer Zusatz-Information aus einem empfangenen Datenstrom kann somit für das Versenden eines Datenstroms in Gegenrichtung den Aufbau bidirektionaler Kommunikationsverbindungen bzw. den Versand von Datenpaketen über solche deutlich vereinfachen.

Anstelle der empfangenen Zusatz-Information kann empfängerseitig auch eine daraus abgeleitete Information in Datenpakete eingesetzt werden, welche in Rückwärtsrichtung zu übertragen sind. Ein anderer Wert als Zusatz-Information könnte beispielsweise einzusetzen sein, wenn in der Rückwärtsrichtung eine andere Dienstgüte erforderlich ist als sie in der Vorwärtsrichtung verwendet wurde.

Vorteilhafte Ausgestaltungen sind Gegenstand von abhängigen Ansprüchen.

Als das Datennetz kann ein fremdes Netz durch das Einsetzen der Zusatz-Information in Datenpakete für die Rückwärtsrichtung direkt verwendet werden, ohne dass parallele Verbindungen gemäß speziellen Standards des Kommunikationssystems aufgebaut und unterhalten werden müssen. Unter einem fremden Netz wird insbesondere ein Netz verstanden, welches gegenüber dem eigentlichen Kommunikationssystem als fremdes Netz anzusehen ist, also mit einem speziellen Standard arbeitet, welcher nicht typisch für den restlichen Teil des Kommunikationssystems ist.

Zweckmäßigerweise wird die Zusatz-Information in den empfangenden Stationen zwischengespeichert, so dass die Zusatz-Information in Datenpakete für die Übertragung in Rückwärtsrichtung fortwährend eingesetzt werden kann. Insbesondere ist es möglich, nicht nur unmittelbar auf eine Anforderung zurückgesendete Datenpakete mit der Zusatz-Information zu versehen, sondern auch zum Anforderungszeitpunkt zeitlich versetzt zu übertragende Datenpakete in Rückwärtsrichtung mit der Zusatz-Information zu versehen.

Vorteilhafterweise wird die Zusatz-Information auf diese Art und Weise direkt auf der Transportschicht des Datennetzes übertragen, so dass logische Steuerverbindungen nicht verwendet werden müssen.

Als Zusatz-Information kann beispielsweise eine Übertragungsqualität, insbesondere eine erforderliche Dienstgüte übertragen werden. Vorteilhafterweise wird dabei für Verbindungen mit mehreren möglichen Übertragungsqualitäten die strengst mögliche Übertragungsqualität als Kriterium angesetzt, so dass sichergestellt ist, dass jedes Datenpaket unabhängig von einer möglicherweise höheren oder geringeren erforderlichen Übertragungsqualität in jedem Fall mit der ausreichenden Übertragungsqualität weitergeleitet wird.

Vorteilhafterweise kann bei der Übertragung eine Quelladresse aus der ersten Verbindung als Zusatz-Information abgespeichert werden und für Datenpakete in Rückwärtsrichtung als Zieladresse des Datenpaketes eingetragen werden. Dadurch kann die Umleitung von Datenpaketen über eine separate Einrichtung wie einen Heimatagenten vermieden werden, solange eine anfordernde Station über die ursprüngliche Quelladresse erreichbar ist. Der Umweg über den Heimatagenten wird erst für den Fall erforderlich, dass die anfordernde Station ihre Quelladresse geändert hat, was beispielsweise nach einem Standortwechsel und Netzzugang über einen anderen Zugriffspunkt der Fall ist.

Als zweite Verbindung für die Rückwärtsrichtung kann entsprechend eine Rückverbindung zwischen netzseitigen Stationen bzw. Einrichtungen eines Funk-Kommunikationssystems gemäß z. B. UMTS angesehen werden. Die zweite Verbindung kann beispielsweise auch eine Verbindung zu einer weiteren Station, insbesondere zu einer Funk-Endstation sein, wie z. B. einem mobilen Host oder einem mobilen Funktelefon. Als zweite Verbindung kann beispielsweise auch eine Verbindung zwischen einer teilnehmerseitigen Datenstation und einem Datenserver angesehen werden.

Das Verfahren bzw. die Kommunikationssystem-Einrichtung ermöglichen somit eine implizite Signalisierung von z. B. Dienstgütemerkmalen einer IP-Transportverbindung in UMTS durch beispielsweise die Verwendung des Servicetyp-Feldes in dem IP-Kopfabschnitt von Datenpaketen. Dabei ist das Einsetzen von Zusatz-Information in Datenpakete in Rückwärtsrichtung eine einfache Lösung, die in bestehenden und zukünftigen Kommunikationssystemeinrichtungen ohne großen Hard- und Softwareaufwand implementiert werden kann.
Ausführungsbeispiele werden nachfolgend anhand der Zeichnungen näher erläutert. Es zeigen:
- Fig. 1: beispielhafte Stationen eines Kommunikationssystems gemäß einem ersten Ausführungsbeispiel und
- Fig. 2: eine Anordnung von Stationen sowie eine Skizzierung von Verfahrensabläufen gemäß einem zweiten Ausführungsbeispiel.

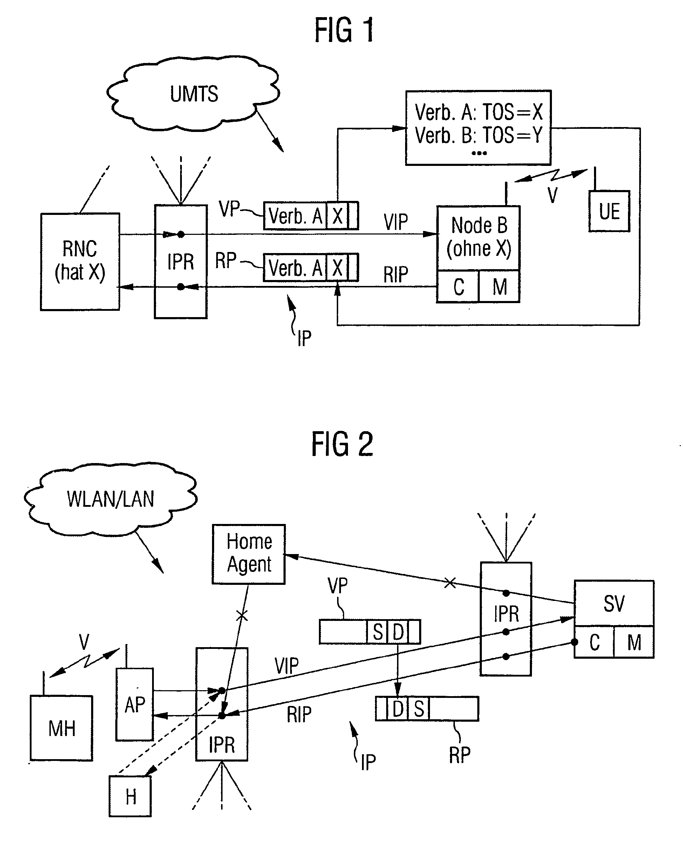

Wie aus Fig. 1 ersichtlich, ist an der Übertragung von Daten in einem Kommunikationssystem eine Vielzahl von Einrichtungen und Stationen beteiligt, von denen nur Einzelne zur Veranschaulichung des Verfahrensablaufs dargestellt sind. Beispielhaft für ein Kommunikationssystem sind dabei Einrichtungen des UMTS (Universal Mobil Telecommunications System) dargestellt.

Um von einer teilnehmerseitigen Station UE, insbesondere einem zellularen Funktelefon, Daten zu versenden oder zu empfangen, wird eine Funkverbindung V mit einer netzseitigen Zugangsstation, welche als Sende- und Empfangsstation NodeB dient, aufgebaut. Von der netzseitigen Sende- und Empfangsstation NodeB wird eine weitere Verbindung, insbesondere kabelgestützte Verbindung VIP, RIP zu einer Funknetz-Steuereinrichtung RNC aufgebaut. Die Funknetz-Steuereinrichtung RNC verwaltet üblicherweise eine Vielzahl derartiger Sende- und Empfangsstationen NodeB. Außerdem weist die Funknetz-Steuereinrichtung RNC direkt oder indirekt Verbindungen zu verschiedenen anderen Einrichtungen und Stationen des Kommunikationssystems UMTS auf, beispielsweise Verbindungen zu Heimatregistern, Besucherregistern, einem System- und Wartungszentrum und Schnittstellen zu andersartigen Kommunikationssystemen. Eine von der teilnehmerseitigen Station UE ausgehende oder zu der teilnehmerseitigen Station UE führende Verbindung wird üblicherweise zwischen der teilnehmerseitigen Station UE über die Sende- und Empfangsstation NodeB zu der Funknetz-Steuereinrichtung RNC aufgebaut und von dort aus zu einem gewünschten Kommunikationspartner der teilnehmerseitigen Station UE weitergeleitet. Der Kommunikationspartner kann dabei eine andere solche teilnehmerseitige Station UE an der gleichen Sende- und Empfangsstation NodeB einer anderen Sende- und Empfangsstation oder in einem anderen Kommunikationssystem sein.

Die Funkschnittstelle V zwischen der Sende- und Empfangsstation NodeB und der teilnehmerseitigen Station UE wird gemäß den Vorgaben des Kommunikationssystems UMTS aufgebaut und unterhalten. Die Verbindung zwischen der Sende- und Empfangsstation NodeB und der Funknetz-Steuereinrichtung RNC wird hingegen über eine Verbindung aufgebaut, welche den Vorgaben eines Datennetzes unterliegt. Im Fall des UMTS als Kommunikationssystem kann diese netzseitige Verbindung zwischen der Sende- und Empfangsstation NodeB und der Funknetz-Steuereinrichtung RNC gemäß dem sogenannten Internet-Protokoll IP erfolgen. Dabei werden Daten in Datenpaketen von der Funknetz-Steuereinrichtung RNC zur Sende- und Empfangsstation NodeB über eine vorwärtsgerichtete Verbindung VIP in Vorwärtsrichtung übertragen. Ein typisches Datenpaket besteht dabei aus einem Kopfabschnitt und einem Datenabschnitt, wobei im Kopfabschnitt Informationen über die Quelladresse, die Zieladresse und Information bezüglich der Daten im Nutzdatenabschnitt enthalten sind. Ferner wird eine Verbindung RIP in Rückwärtsrichtung zwischen der Sende- und Empfangsstation NodeB und der Funknetz-Steuereinrichtung RNC aufgebaut, über die Daten in Datenpaketen verpackt in Rückwärtsrichtung übertragen werden.

Bei derartigen Datennetzen ist die Zwischenschaltung von Leit- und Verteilungseinrichtungen, insbesondere sogenannten Routern IPR üblich. In einem Router IPR eintreffende Datenpakete werden hinsichtlich der Zieladresse und gegebenenfalls hinsichtlich Zusatzinformation untersucht und dann über eine geeignete Ausgangsleitung in Richtung der Zieladresse weitergeleitet. Dabei können Vorgaben berücksichtigt werden, welche sich aus der Zusatz-Information X ergeben. Beispielsweise kann die Zusatz-Information eine Angabe über eine mindest erforderliche Verbindungsqualität aufweisen, so dass seitens des Routers IPR eine Verbindung ausgewählt wird, über welche ein eingetroffenes Datenpaket VP, RP in Richtung der gewünschten Zieladresse bevorzugt weitergeleitet wird. Möglich ist auch die Reservierung einer solchen Verbindung für nur noch eine begrenzte Anzahl von Datenpaketen, um diese mit erhöhter Priorität und Übertragungssicherheit weiterleiten zu können.

Bei dem in Fig. 1 dargestellten Ausführungsbeispiel wird nachfolgend davon ausgegangen, dass in der Funknetz-Steuereinrichtung RNC ein Datenpaket eingetroffen ist, welches mit z. B. einer bestimmten mindest erforderlichen Verbindungsqualität zu übertragen ist. In der Sende- und Empfangsstation NodeB ist diese Information nicht vorhanden. Die Funknetz-Steuereinrichtung RNC kann eine Zusatz-Information X durch das Einsetzen dieser entsprechenden Zusatz-Information X in das entsprechende Feld in den Kopfabschnitt des Datenpakets VP zu der dieses Datenpaket VP empfangenden Sende- und Empfangsstation NodeB übertragen. Dadurch wird die Sende- und Empfangsstation NodeB in die Lage versetzt, die durch die Zusatz-Information X vorgegebenen Bedingungen bei der weiteren Verarbeitung des Datenpakets bzw. der darin enthaltenen Daten zu berücksichtigen.

Bei einer Übertragung in Rückwärtsrichtung von der teilnehmerseitigen Station UE über die Funkschnittstelle V zur Sende- und Empfangsstation NodeB fehlte eine entsprechende Zusatz-Information, welche für die weitere Verbindungsstrecke, d. h. die Verbindung in Rückwärtsrichtung RIP zur Funknetz-Steuereinrichtung RNC in weiterzuleitende Datenpakete RP einsetzbar ist. Um für eine solche Verbindung RIP in Rückwärtsrichtung trotzdem eine entsprechende Weiterleitung von Datenpaketen RP in Rückwärtsrichtung gemäß den Vorgaben des Transports von Datenpaketen VP in Vorwärtsrichtung zu ermöglichen, ermittelt die Sende- und Empfangsstation NodeB die entsprechende Zusatzinformation X aus in Vorwärtsrichtung eintreffenden Datenpaketen VP von der vorwärtsgerichteten Verbindung VIP und speichert diese Zusatz-Information X in ihrem Speicher M ab. Für den Versand von Datenpaketen RP in Rückwärtsrichtung über die Verbindung RIP zur Funknetz-Steuereinrichtung RNC liest die Sende- und Empfangsstation NodeB die Zusatz-Information X aus ihrem Speicher M aus und setzt diese Zusatz-Information X in die in Rückwärtsrichtung zu versendenden Datenpakete PR in das entsprechende Feld im Kopfabschnitt (TOS) der Datenpakete ein. Dadurch kann auch auf der Verbindung RIP in Rückwärtsrichtung die Zusatz-Information X bei dem Transport und der Weiterleitung der Datenpakete RP in Rückwärtsrichtung berücksichtigt werden. Insbesondere kann die Zusatz-Information X durch Router IPR berücksichtigt werden, welche sich auf der Verbindungsstrecke zwischen der Sende- und Empfangsstation NodeB und der Funknetz-Steuereinrichtung RNC befinden. Um das Verwalten, insbesondere Auslesen, Zwischenspeichern und Einsetzen der Zusatz-Information X zu ermöglichen wird vorteilhafterweise die Steuereinrichtung C der Sende- und Empfangsstation NodeB um eine entsprechende Hardware- und/oder Softwarekomponente erweitert.

Für den Fall, dass es sich bei der aufgebauten Verbindung RIP in Rückwärtsrichtung zwischen der Sende- und Empfangsstation NodeB und der Funknetz-Steuereinrichtung RNC um eine unidirektionale Verbindung handelt, welche die Sende- und Empfangsstation NodeB verlässt, wird ein einheitlicher Standardwert in die entsprechenden Felder des Kopfabschnitts der Datenpakete RP eingesetzt. Vorzugsweise wird dabei in das entsprechende Kopfabschnittsfeld TOS des Datenpakets RP ein Wert eingetragen, welcher die strengsten Bedingungen voraussetzt, die für Einzelne aus einer Vielzahl zu übertragender Datenpakete auf dieser Verbindung RIP in Rückwärtsrichtung möglich sind. Dadurch kann sichergestellt werden, dass alle Datenpakete RP bestmöglich weitergeleitet werden.

Alternativ ist auch das Einsetzen eines anderen Standard-Wertes in das entsprechende Kopfabschnittsfeld (TOS) möglich, beispielsweise dann, wenn nur selten ein Datenpaket RP in Rückwärtsrichtung zu übertragen ist, welches sehr hohe Anforderungen an die Verbindungsqualität stellt, so dass mit Blick auf die Vielzahl von Datenpaketen RP mit geringen Qualitätsanforderungen eine seltene wiederholte Übertragung eines unzureichend empfangenen Datenpakets RP mit hohen Qualitätsanforderungen in Kauf genommen werden kann.

Bei dieser Verfahrensweise wird somit eine implizit in der Sende- und Empfangsstation NodeB empfangene Zusatz-Information X zwischengespeichert und für Übertragungen in der Gegenrichtung verwendet, so dass auch in der Gegenrichtung bzw. Rückwärtsrichtung die Zusatz-Information X in den Datenpaketen RP enthalten ist. Eine explizite Signalisierung der Zusatz-Information X über eine separate Signalisierungsverbindung ist entbehrlich. In Fällen, bei denen eine separate Signalisierung gar nicht vorgesehen ist, ermöglicht die beschriebene Verfahrensweise überhaupt erst die Berücksichtigung von Übertragungsparametern durch die in Rückwärtsrichtung mit übertragene Zusatz-Information X, so dass auch in solchen Fällen bei einer bidirektionalen Kommunikation die entsprechende Kommunikationsparameter in beiden Kommunikationsrichtungen verfügbar sind.

Vorteilhafterweise wird die Zusatz-Information X bei dieser Verfahrensweise direkt implizit auf der Transportschicht übertragen, wobei zwischengeschaltete Stationen, insbesondere Router IPR aus weiterzuleitenden Datenpaketen RP in Rückwärtsrichtung die entsprechende Zusatz-Information X ableiten können, welche ansonsten Mangels einer Signalisierungsverbindung auf einer höheren Schicht des Transportprotokolls nicht verfügbar wäre oder nur aufwendig zu beschaffen wäre.

Während bei dem Ausführungsbeispiel gemäß Fig. 1 eine Zusatz-Information X aus einem Datenpaket VP von einer Verbindung VIP in Vorwärtsrichtung in der empfangenden Sende- und Empfangsstation NodeB in Datenpakete RP gespiegelt wird, welche über eine Verbindung RIP in Rückwärtsrichtung zu der Funknetz-Steuereinrichtung RNC zurückzuübertragen sind, sind auch andere Anwendungsmöglichkeiten möglich, die auf diesem Grundgedanken basieren.

Wie aus Fig. 2 ersichtlich, kann die Verfahrensweise z. B. auch auf eine Situation angewendet werden, bei der ein mobiler funkgestützter Computer, auch als mobiler Host MH bezeichnet, über eine funkgestützte Verbindung V auf einen Zugriffspunkt AP eines lokalen funkgestützten Datennetzes WLAN zugreift, um dann über das Datennetz WLAN mit einem entfernten Server SV zu kommunizieren. Das Datennetz ist beim dargestellten Ausführungsbeispiel wiederum ein Datennetz WLAN mit einer Datenübertragung gemäß dem Internet-Protokoll IP und weist auf der Verbindungsstrecke VIP, RIP üblicherweise einen oder mehrere Router IPR auf. Wiederum können die Verbindung VIP in Vorwärtsrichtung von dem Zugriffspunkt AP zum Server SV und die entsprechende Verbindung RIP in Rückwärtsrichtung vom Server SV zum Zugriffspunkt AP bzw. über diesen hinaus zum mobilen Host MH als bidirektionale oder als einzelne unidirektionale Verbindungen aufgebaut werden.

Alternativ zu dem dargestellten mobilen Host MH, welcher über die Funkschnittstelle V mit dem Zugriffspunkt AP kommuniziert, kann auch ein Host H direkt über den Zugriffspunkt AP oder einen Router IPR an das Datennetz WLAN angeschlossen werden. Ein solcher Host H kann insbesondere direkt über das Internet-Protokoll IP mit dem Datennetz WLAN kommunizieren, so dass die Funkschnittstellen-Technologie nicht erforderlich ist.

Bei dem Einsatz eines mobilen Host MH und eines Datennetzes WLAN mit mehreren Zugriffspunkten AP, AP2 bei denen sich der mobile Host MH zum. Verbindungsaufbau anmelden kann, besteht das Problem, dass die vom Server SV durch den mobilen Host MH angeforderten Datenpakete RP in Rückwärtsrichtung über den Heimatagenten HA übertragen werden, welcher stets Kenntnis über den Aufenthaltsort des mobilen Host MH und damit stets Kenntnis von dessen momentaner Adresse hat.

Unter der Annahme, dass der mobile Host MH für eine ausreichende Zeit nach der Anforderung eines Datenpakets RP über den gleichen Zugriffspunkt AP erreichbar ist, ändert sich die Zieladresse D für die Datenpakete RP in Rückwärtsrichtung nicht. Daher kann der Server SV nach dem Empfang eines Datenpakets VP von dem mobilen Host MH die Quelladresse S des empfangenen Datenpakets VP auslesen und ggf. in dem Speicher M des Servers zwischenspeichern.

Für die Übertragung in Rückwärtsrichtung bereitgestellte Datenpakete RP, welche der Server SV zu dem mobilen Host MH sendet, wird anschließend vom Server SV anstelle der Adresse des Heimatagenten HA und einer den mobilen Host MH eindeutig identifizierenden Information die ursprüngliche Quelladresse S als Zieladresse D in die Datenpakete RP eingesetzt.

Für die Durchführung der entsprechenden Funktionalität wird vorzugsweise die Steuereinrichtung C des Servers SV um entsprechende Hardware- und/oder Softwarekomponenten erweitert, welche das Auslesen der Quelladresse S aus einem empfangenen Datenpaket VP, das Zwischenspeichern der Quelladresse S in Art einer Zusatz- oder Adressinformation im Speicher M und das Einsetzen der Quelladresse S als Zieladresse D in ein in Rückwärtsrichtung zu versendendes Datenpaket RP steuern.

Eine Übertragung der Datenpakete RP in Rückwärtsrichtung über den Heimatagenten HA kann somit bis auf die Fälle ausgelassen werden, bei denen sich der mobile Host MH aus dem Sendebereich des ursprünglichen Zugriffspunkte AP wegbewegt hat oder aus einem anderen Grund eine neue Zieladresse zugewiesen bekommen hat. Insbesondere kann der Server SV zusätzlich eine Empfangsbestätigung bei dem mobilen Host MH anfordern, so dass im Fall einer ausbleibenden Empfangsbestätigung ein wiederholter Datenversandt eines identischen in Rückwärtsrichtung übertragenen Datenpakets RP über den üblichen Weg unter Zwischenschaltung des Heimatagenten HA durchgeführt werden kann.

Während bei dem ersten Ausführungsbeispiel die von der Sende- und Empfangsstation NodeB in Rückwärtsrichtung zu übertragenden Datenpakete RP von der teilnehmerseitigen Station UE über die Funkschnittstelle V zur Weiterleitung empfangen wurden, bestehen die Datenpakete RP in Rückwärtsrichtung bei dem zweiten Ausführungsbeispiel aus Daten, welche entweder im Server selber, insbesondere in dessen Speicher M, bereitgestellt oder von dem Server SV von einer anderen Datenquelle beschafft wurden.

## Patentansprüche

1. Verfahren zum Übertragen von Informationen in einem Kommunikationssystem (UMTS) mit einer Vielzahl von Kommunikationssystems-Einrichtungen (RNC, NodeB), welche zum Aufbau und Unterhalten von Verbindungen über ein Datennetz (IP) miteinander verbunden sind, wobei
- eine erste Kommunikationssystem-Einrichtung (RNC) über eine Zusatz-Information (X) bezüglich einer ersten bereits aufgebauten Verbindung (VIP) mit einer zweiten Kommunikationssystem-Einrichtung (NodeB) verfügt, wobei die Zusatz-Information keine Adress-Information ist,
- die zweite Kommunikationssystem-Einrichtung (NodeB) über diese Zusatz-Information (X) bezüglich der ersten bereits aufgebauten Verbindung (VIP) nicht verfügt und
- die erste Kommunikationssystem-Einrichtung (RNC) die Zusatz-Information (X) in alle Datenpakete (VP) oder zumindest ein Datenpaket (VP) einsetzt, das zu der zweiten Kommunikationssystem-Einrichtung (NodeB) über die erste bereits aufgebaute Verbindung übertragen wird,
**dadurch gekennzeichnet, dass**
- die zweite Kommunikationssystem-Einriehtung (NodeB) die von der ersten Kommunikationssystem-Einrichtung (RNC) empfangene Zusatz-Information (X) oder eine daraus abgeleitete Information als Zusatz- und/oder Adress-Information (X) in ein Datenpaket (RP) einsetzt, welches durch die zweite Kommunikationssystem-Einrichtung (NodeB) über eine auf die erste bereits aufgebaute Verbindung (VIP) bezogene zweite Verbindung (RIP) zu übertragen ist.

2. Verfahren nach Anspruch 1, bei dem
als das Datennetz (IP) ein gegenüber dem sonstigen Kommunikationssystem (UMTS; WLAN) fremdes Netz, insbesondere fremdes Netz gemäß dem Internet-Protokoll verwendet wird.

3. Verfahren nach Anspruch 1 oder 2, bei dem
die zweite Kommunikationssystem-Einrichtung (NodeB) die Zusatz-Information (X) zwischenspeichert, solange die erste Verbindung (VIP) besteht oder diesbezüglich eine solche zweite Verbindung (RIP; V) noch aufzubauen ist oder Datenpakete (RP) über eine solche zweite Verbindung (RIP; V) zu versenden sind.

4. Verfahren nach einem vorstehenden Anspruch, bei dem
die Zusatz-Information (X) auf der Transportschicht des Datennetzes (IP) übertragen wird.

5. Verfahren nach einem vorstehenden Anspruch, bei dem
als Zusatz-Information (X) eine mindest erforderliche Übertragungsqualität, insbesondere Dienstgüte übertragen wird.

6. Verfahren nach einem vorstehenden Anspruch, bei dem
als Zusatz-Information (X) bezüglich der ersten Verbindung verschiedene Anforderungskriterien in Datenpakete eingesetzt und zu der zweiten Kommunikations-Einrichtung übertragen werden und die strengsten Anforderungskriterien werden von der zweiten Kommunikations-Einrichtung als Zusatz-Information für Übertragungen auf der zweiten Verbindung (RIP) verwendet, insbesondere bei einer zweiten Verbindung (RIP) in Rückwärtsrichtung, welche als unidirektionale Verbindung aufgebaut wird.

7. verfahren nach einem vorstehenden Anspruch, bei dem
als zweite Verbindung in Rückwärtsrichtung eine Verbindung (RIP) zwischen der ersten und der zweiten Kommunikationssystem-Einrichtung aufgebaut wird, wobei verbindende und verteilende Stationen, insbesondere Router (IPR), zwischengeschaltet werden.

8. Verfahren nach einem vorstehenden Anspruch, bei dem
als zweite Verbindung eine Verbindung (V) zu einer weiteren Station, insbesondere Funk-Endstation (UE; WH), jenseits eines Zugriffspunkts (NodeB; AP) einer Endstation des Datennetzes (IP) verwendet oder zusätzlich verwendet wird.

9. verfahren nach einem vorstehenden Anspruch, bei dem
als zweite Verbindung eine Verbindung (RIP) zwischen einer teilnehmerseitigen Datenstation (GH; H) und/oder einer damit kommunizierenden Zugriffsstation (AP) bzw. Verbindungsstation (IPR) einerseits und einem Datenserver (SV) andererseits verwendet wird.

10. Kommunikationssystem-Einrichtung (NodeB; SV) zum Durchführen eines Verfahrens nach einem vorstehenden Anspruch, mit
- einer Steuereinrichtung (C) zum Betreiben der Kommunikationssystem-Einrichtung,
- einem Speicher (M) zum Abspeichern von Informationen (X; S, D) bezüglich zu übertragender Daten und Datenpakete (VP, RP),
**dadurch gekennzeichnet,**
- **dass** die Steuereinrichtung (C) ausgelegt ist, eine Zusatz-Information (X) aus einem über eine erste bereits aufgebaute Verbindung (VIP) von einer anderen Kommunikationssystem-Einrichtung empfangenen Datenpaket (VP) oder eine aus der Zusatz-Information (X) abgeleitete Information in ein Datenpaket (RP) einer auf die erste bereits aufgebaute Verbindung bezogenen zweiten Verbindung (RIP) als Zusatz- und/oder Adrese-Information (X) einzusetzen, wobei die Zusatz-Information (X) aus dem empfangenen Datenpaket keine Adress-Information ist.

## Claims

1. Method for transmission of information in a communication system (UMTS) with a plurality of communication system devices (RNC, NodeB) which are connected to each other for establishing and maintaining connections via a data network (IP), with
- a first communication system device (RNC) having additional information (X) relating a first connection (VIP) already established with a second communication system device (NodeB) with the additional information not being address information,
- the second communication system device (NodeB) not having this additional information (X) relating to the first already established connection (VIP), and
- the first communication system device (RNC) using the additional information (X) in all data packets (VP) or at least one data packet (VP) which are transmitted to the second communication system device (NodeB) over the first already established connection,
**characterized in that**,
- the second communication system device (NodeB) using the additional information (X) received from the first communication system device (RNC) or information derived from it as additional and/or address information (X) in a data packet (RP), which is transmitted by the second communication system device (NodeB) over a second connection (RIP) related to the first already established connection (VIP).

2. Method in accordance with claim 1, in which
a different network in relation to the other communication system (UMTS; WLAN), especially a different network operating in accordance with the Internet Protocol, is used as the data network (IP).

3. Method in accordance with claim 1 or 2, in which the second communication system device (NodeB) buffers the additional information (X) for as long as the first connection (VIP) or such a second connection (RIP; V) relating to it is still to be established or data packets (RP) are to be transmitted over such a second connection (RIP; V).

4. Method in accordance with a previous claim, in which the additional information (X) is transmitted on the transport layer (IP) of the data network.

5. Method in accordance with a previous claim, in which a minimum required transmission quality, especially quality of service, is transmitted as additional information (X).

6. Method in accordance with a previous claim, in which different requirement criteria are used in data packets as additional information (X) relating to the first connection and are transmitted to the second communication device and the most stringent requirement criteria are used by the second communication device as additional information for transmissions on the second connection (RIP), especially for a second connection (RIP) in the backwards direction, which is set up as a unidirectional connection.

7. method in accordance with a previous claim, in which a connection (RIP) between the first and the second communication system device is established as a second connection in the backwards direction, with connecting and distributing stations, especially routers (IPR) being connected in between.

8. Method in accordance with a previous claim, in which a connection (V) to a further station. especially a radio terminal (UE; WH), on that side of an access point (NodeB; AP) of a terminal of the data network (IP) is used or additionally used as the second connection.

9. Method in accordance with a previous claim, in which a connection (RIP) between a subscriber-side data terminal (GH; H) and/or an access station (AP) or connection station (IPR) communicating with it on one side and a data server (SV) on the other side is used as the second connection.

10. Communication system device (NodeB; SV) to execute a method in accordance with a previous claim; with
- a control device (C) to operate the communication system device,
- a memory (M) to store information (X; S, D) relating to data and data packets (VP, RP) to be transmitted),
**characterized in that**.
- the controller (C) is designed to use additional information (X) from a data packet (VP) received over an already established connection (VIP) from another communication system device or information derived from the additional information (X) in a data packet (RP) of a second connection (RIP) related to the first already established connection as additional and/or address information (X), with the additional information (X) from the received data packet not being address information.

## Revendications

1. Procédé pour la transmission d'informations dans un système de communication (UMTS) comprenant une pluralité de dispositifs de système de communication (RNC, NodeB), qui sont reliés entre eux pour l'établissement et l'entretien de liaisons au moyen d'un réseau de données (IP),
- un premier dispositif de système de communication (RNC) disposant d'une information supplémentaire (X) relative à une première liaison (VIP) déjà établie avec un second dispositif de système de communication (NodeB), l'information supplémentaire n'étant pas une information d'adresse,
- le deuxième dispositif de système de communication (NodeB) ne disposant pas de cette information supplémentaire (X) concernant la première liaison (VIP) déjà établie et
- le premier dispositif de système de communication (RNC) insérant l'information supplémentaire (X) dans tous les paquets de données (VP) ou au moins un paquet de données (VP), qui est transmis au second dispositif de système de communication (NodeB) par l'intermédiaire de la première liaison déjà établie,
**caractérisé en ce que**
- le second dispositif de système de communication (NodeB) insère l'information supplémentaire (X) reçue du premier dispositif de système de communication (RNC) ou une information déduite de celle-ci comme information supplémentaire et/ou d'adresse (X) dans un paquet de données (RP), qui peut être transmis par le second dispositif de système de communication (NodeB) au moyen d'une seconde liaison (RIP) spécifique à la première liaison (VIP) déjà établie.

2. Procédé selon la revendication 1, dans lequel
on utilise comme réseau de données (IP) un réseau extérieur par rapport au système de communication habituel (UMTS ; WLAN), en particulier un réseau extérieur selon le protocole Internet.

3. Procédé selon la revendication 1 ou 2, dans lequel
le deuxième dispositif de système de communication (NodeB) mémorise temporairement l'information supplémentaire (X), aussi longtemps que la première liaison (VIP) existe ou qu'une telle seconde liaison (RIP ; V) ne peut pas encore être établie à ce sujet ou que des paquets de données (RP) doivent être envoyés au moyen d'une telle seconde liaison (RIP ; V).

4. Procédé selon une revendication précédente, dans lequel l'information supplémentaire (X) est transmise sur la couche transport du réseau de données (IP).

5. Procédé selon une revendication précédente, dans lequel une qualité de transmission minimum indispensable, en particulier une qualité de service, est transmise comme information supplémentaire (X).

6. Procédé selon une revendication précédente, dans lequel différents critères d'exigence sont insérés dans des paquets de données comme information supplémentaire (X) relative à la première liaison et sont transmis au second dispositif de communication et les critères d'exigence les plus stricts sont utilisés par le second dispositif de communication comme information supplémentaire pour des transmissions sur la seconde liaison (RIP), en particulier lors d'une seconde liaison (RIP) dans le sens arrière, qui est établie comme liaison unidirectionnelle.

7. Procédé selon une revendication précédente, dans lequel, comme seconde liaison dans le sens arrière, on établit une liaison (RIP) entre le premier dispositif de système de communication et le second dispositif de système de communication, des stations de liaison et de répartition, en particulier des routeurs (IPR), étant intercalées.

8. Procédé selon une revendication précédente, dans lequel, comme seconde liaison, on utilise une liaison (V) avec une autre station, en particulier un terminal radio (UE ; WH), au-delà d'un point d'accès (NodeB ; AP) d'un terminal du réseau de données (IP) ou on l'utilise en supplément.

9. Procédé selon une revendication précédente, dans lequel, comme seconde liaison, on utilise une liaison (RIP) entre une station de données côté abonné (GH ; H) et/ou une station d'accès (AP) resp. station de liaison (IPR) communiquant avec la première d'une part et un serveur de données (SV) d'autre part.

10. Dispositif de système de communication (NodeB ; SV) pour la mise en oeuvre d'un procédé selon une revendication précédente, comprenant
- un dispositif de commande (C) pour l'exploitation du dispositif de système de communication,
- une mémoire (M) pour la mémorisation d'informations (X ; S, D) par rapport à des données et des paquets de données (VP, RP) à transmettre, **caractérisé en ce que**,
- le dispositif de commande (C) est conçu pour insérer une information supplémentaire (X) provenant d'un paquet de données (VP) reçu au moyen d'une première liaison (VIP) déjà établie d'un autre dispositif de système de communication ou une information déduite de l'information supplémentaire (X) dans un paquet de données (RP) d'une seconde liaison (RIP) spécifique à la première liaison déjà établie comme information supplémentaire et/ou d'adresse (X), l'information supplémentaire (X) provenant du paquet de données reçu n'étant pas une information d'adresse.
